Europäisches Patentamt

European Patent Office

Office européen des brevets

(19)

(11) Veröffentlichungsnummer: **0 063 157
B1**

# EUROPÄISCHE PATENTSCHRIFT

(12)

(45) Veröffentlichungstag der Patentschrift:
30.05.84

(51) Int. Cl.³: **G 02 B  27/22**, G 02 B  7/12

(21) Anmeldenummer: **81903248.3**

(22) Anmeldetag: **02.12.81**

(86) Internationale Anmeldenummer:
**PCT/CH  81/00135**

(87) Internationale Veröffentlichungsnummer:
**WO  82/02098  (24.06.82** Gazette **82/16)**

(54) OPTISCHE ANORDNUNG ZUR ERZEUGUNG ZWEIER ANAMORPHOTISCHER UND DURCH EINEN INTEROKULAREN BASISABSTAND KORRELIERTER BILDER.

(30) Priorität: **08.12.80  CH 9041/80**

(43) Veröffentlichungstag der Anmeldung:
**27.10.82 Patentblatt 82/43**

(45) Bekanntmachung des Hinweises auf die Patenterteilung:
**30.05.84 Patentblatt 84/22**

(84) Benannte Vertragsstaaten:
**AT CH DE FR GB LI LU NL SE**

(56) Entgegenhaltungen:
**DE - A - 2 557 471
GB - A - 282 078
US - A - 2 595 409
US - A - 3 425 775
US - A - 4 205 894**

(73) Patentinhaber: **MEIER, Walter, Stöckenstrasse 29,
CH-8903 Birmensdorf (CH)**

(72) Erfinder: **JACOBSEN, Jan, Ludwig Rif Strasse 9,
D-8901 Reutern (DE)**

(74) Vertreter: **Frei, Alexandra Sarah, Egli Patentanwälte
Horneggstrasse 4, CH-8008 Zürich (CH)**

## Beschreibung

Die Erfindung liegt auf dem Gebiet der optischen Abbildung und betrifft eine Anordnung optischer Elemente zur Erzeugung von paarweisen, interokular korrelierten, anamorphotisch linear komprimierten Bildern, insbesondere zur Belichtung von Filmmaterial, die sich auch zur entzerrten Wiedergabe der solchermassen auf Film festgehaltenen Bildern, insbesondere auf eine doppelt gekrümmte Projektionsebene als echt stereophotographische Abbildungen eignen.

Bei Filmaufführungen wird vielfach versucht, dem Betrachter den Eindruck zu vermitteln, er wäre in das lichtbildnerisch dargestellte Geschehen miteinbezogen. Die Attraktivität der möglichst wirklichkeitsnahen Darstellung eines meist optisch dramatischen Ablaufs, wie beispielsweise auf den Betrachter zufliegende Gegenstände, abschüssige Fahrten, die den Betrachter zu mannigfaltigen Reaktionen veranlassen, haben zu zahlreichen technischen Lösungen auf diesem Gebiete geführt.

So beschreibt beispielsweise die US-PS 429 365 eine Weitwinkel-Projektions-Anordnung, in der drei Projektoren ein, aus drei Bildern zusammengefügtes Bild auf eine zylindrisch gekrümmte Projektionsfläche projizieren, um dem Betrachter einen panoramaartigen Effekt zu bieten. Durch Verwendung von einer speziellen Art flexibler Spiegel kann die Projektion ohne den störenden Blick auf die Projektionsmaschinen, die etwas unterhalb vor dem Betrachter plaziert sind, durchgeführt werden. Das benötigte Seitenverhältnis der Teilbilder wird mit Hilfe anamorphotisch wirkender optischer Mittel erzeugt. Der apparative Aufwand, nämlich drei Kameras und jeweils zwei, also im ganzen sechs Umlenkspiegel, ist beträchtlich. Auch der möglichst nahtlose Übergang der Teilbilder erfordert spezielle Massnahmen.

Wesentlich weniger Aufwand erfordert die beispielsweise in der US-A-4 154 514 angegebene Projektionseinrichtung, mittels der auf einer einseitig, bogenartig stark gekrümmten Projektionsebene ein Bild erzeugt werden kann, bei dem der Betrachter den Eindruck einer räumlichen Wirkung gewinnen soll. Die Projektion wird über einen Winkel zwischen 138° und 153° auf eine zylindrisch gekrümmte Ebene durchgeführt. Gegenüber üblichen 3D-Systemen, unter einem Winkel meist kleiner als 90°, wird zur Erzeugung der Raumwirkung keine zusätzliche optische Sehhilfe benötigt.

Die in dieser Schrift angegebene Projektionsanordnung besteht lediglich noch aus einer einzigen Projektionsapparatur mit vorgeschalteten anamorphotischen Hilfsmitteln, um das erforderliche enorme Breiten/Höhenverhältnis herzustellen. Zur Projektion werden 35 mm Standardfilme mit anamorphen Bildern verwendet.

Der Eindruck der optischen Räumlichkeit rührt weitgehend von der starken Krümmung der Projektionsebene ab, die den Beschauer der Lichtbildszene umgibt bzw. das Blickfeld des Auges derart okkupiert, dass der Bildrahmen nicht mehr wahrgenommen wird. Es handelt sich also nicht um ein Bild, wie es von beiden Augen mit den gegebenen interokularen Abstand wahrgenommen und im Gehirn zu einem Raumbild verarbeitet wird.

Es ist weiterhin eine technische Lösung bekanntgeworden, bei der auf einen 70 mm-Standard-Film im Verhältnis 1:2 zwei anamorphotisch komprimierte, zueinander mit einem interokularen Abstand korrelierte Bilder abgebildet werden. Bei der Projektion entsteht daraus ein Stereo-Breitwandbild mit zwei im interokularen Abstand korrelierten und durch verschiedene Polarisation zusätzlich ausgezeichnete Bilder. Die Betrachtung erfolgt mittels einer Sehhilfe, einer Brille mit zwei zueinander geneigten Polarisatoren.

Zur Aufnahme der Bilder werden zwei Grundoptiken je ein afokaler Anamorphot vorgeschaltet, deren optische Achsen im wesentlichen den mittleren Abstand eines menschlichen Augenpaares aufweisen. Weil auf dem Film der Bildmittenabstand durch das Bildformat bestimmt und im allgemeinen wesentlich kleiner ist, werden durch Umlenkspiegel auf bekannte Art die abgebildeten Objektabstände adaptiert.

Dies erfordert je nach Anamorphot/Grundoptik-Kombination konventioneller Art verhältnismässig grosse Baulängen und damit eine Begrenzung des Aufnahmewinkels. Erschwert wird auch bei der angestrebten extremen Weitwinkelprojektion die Konvergenzsteuerung der beiden korrelierten Bilder. Die einfallenden Lichtstrahlen der beiden Optiken müssen dabei transversal zur optischen Achse verschoben und zugleich fokussiert werden, sobald sich die Aufnahmedistanz ändert.

Es ist Aufgabe der Erfindung, für die Aufnahme von Weitwinkel-Stereobildern, bei der simultan die anamorphotische Kompression angewendet wird, eine besonders einfache optische Anordnung zu schaffen, die ausserdem kleine Baulängen und wenig bewegliche Teile aufweist.

Es ist weiter Aufgabe der Erfindung, bei diesem kompakten anamorphotischen Stereobild-Block, die Konvergenzsteuerung und die Fokussierung simultan durch dasselbe optische Element verrichten zu lassen.

Die Aufgabe wird durch die in den Patentansprüchen angegebene Erfindung gelöst.

Mit Hilfe der nachfolgend aufgeführten Zeichnungen soll die Erfindung auf das einzelne eingehend beschrieben werden. Es zeigen:

Fig. 1 eine optische Anordnung für die anamorphotische Bildkompression gemäss Stand der Technik,

Fig. 2 eine optische Anordnung gemäss Erfindung und

Fig. 3 zeigt die optische Anordnung des gesamten anamorphotischen Stereobild-Blocks gemäss Erfindung.

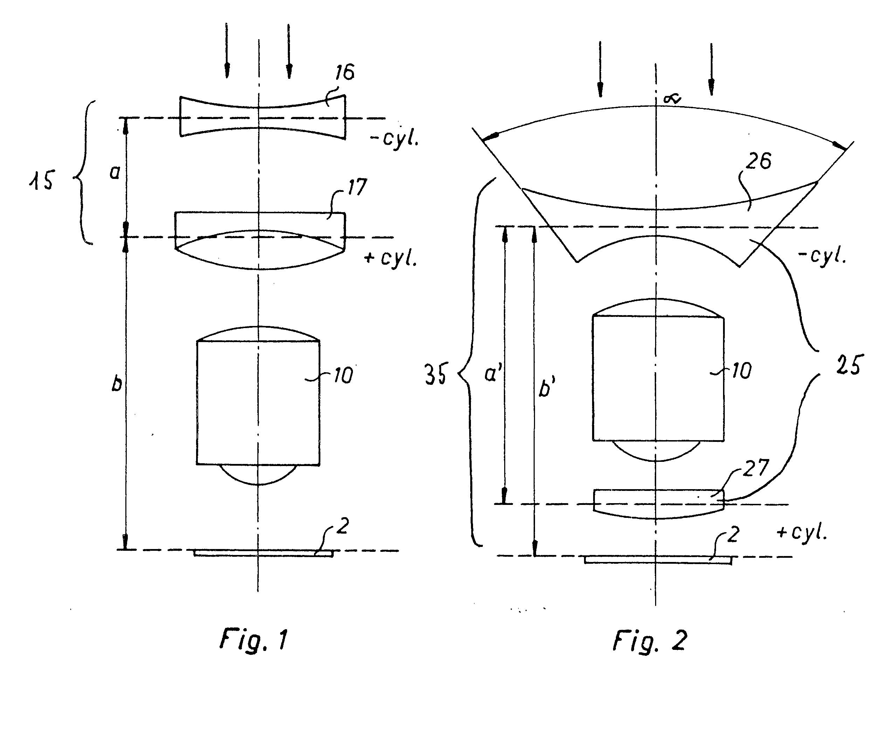

Fig. 1 zeigt den Stand der Technik, d.h. im wesentlichen eine optische Anordnung mit einer Grundoptik 10 und einem in bezug auf die Grundoptik 10 objektraumseitig angeordneten Zylinderanamorphot 15. Dieser vorgeschaltete Anamorphot 15 ist mehrgliedrig und enthält im Abstand a voneinander beabstandete zylindrisch geschliffene Linsen, eine negative Zylinder-Frontlinse 16., d.h. eine zylindrisch geschliffene Streulinse und eine weitere positive Zylinder-Linse 17, d.h. eine zylindrisch geschliffene Sammellinse. Dem Strahlengang folgend kommt dann die Grundoptik 10, die normalerweise der üblichen Kameraoptik entspricht. Durch entsprechende Dimensionierung des anamorphot-Vorsatzes wird dieser optisch auf die Kameraoptik angepasst. Die gesamte Länge von der Frontlinse zur Filmebene beträgt a + b; sie kann je nach optischer Auslegung beträchtlich variieren.

Diese Anordnung bildet auf der Filmebene ein beispielsweise in horizontaler Bildrichtung um den Faktor 2 komprimiertes Abbild des Aufnahmeobjekts.

Zur stereoskopischen Aufnahme müssen zwei derartige Anordnungen verwendet werden, mit der Auflage, dass deren optische Mittelachsen parallel in ungefähr 70 mm Abstand verlaufen müssen. Dieser Abstand ist die mittlere interokulare Distanz bzw. auch Basisabstand genannt.

Es ist klar, dass, zieht man nicht eine getrennte Aufnahme der Stereobilder mit zwei Kameras vor, dieser vorgeschriebene Basisabstand linear auf einen Abstand reduziert werden muss, der durch das verwendete Filmformat als eine von mehreren Randbedingungen vorgegeben wird. Im weiteren ist beispielsweise für extreme Weitwinkelaufnahmen mit vernünftiger Lichtstärke, ein Basisabstand der optischen Achsen zweier Objektive in der Grössenordnung von 70 mm eher an der unteren Grenze. Damit soll ausgedrückt werden, dass man sich auch bei der Wahl der Anamorphoten vor schwerwiegende Dimensionierungsprobleme gestellt sieht.

Im weiteren werden die möglicherweise exzellenten Weitwinkeleigenschaften der Grundoptik durch die Baulänge des Anamorphoten, plus der notwendige Abstand vor diesem, derart geschmälert, dass die angestrebte Weitwinkelprojektion schon aufnahmeseitig nicht realisiert werden kann.

Fig. 2 zeigt eine Anordnung optischer Elemente, bei der gemäss der Erfindung Massnahmen erkennbar sind, die eine gedrängtere Bauweise bei besserer oder voller Ausnützung der Weitwinkeleigenschaften der Grundoptik gestatten. Der mehrgliedrige Zylinderanamorphot 25 wurde funktionell aufgelöst, in dem die Grundoptik 10 im Raum des Abstandes a' angeordnet wurde. Der so neugestaltete anamorphotische Block besteht nun aus einer negativen Zylinderlinse 26, also einer zylindrisch geschliffenen Streulinse, die objektraumseitig vor der Grundoptik 10 angeordnet ist, anschliessend die Grundoptik, die durch diese Massnahme sehr nahe an die Streulinse 26 herangeführt werden kann. Dem Strahlengang weiter folgend ist dann eine positive Zylinderlinse 27, also eine zylindrisch geschliffene Sammellinse angeordnet. Diese Linse liegt bildraumseitig vor der Filmebene 2.

Diese funktionelle Verschachtelung der Grundoptik mit dem anamorphotischen System erlaubt wesentlich kürzere Baulängen, indem der Raum zwischen den beiden Zylinderlinsen praktisch vollständig genützt wird. Der Winkel α, der mit geeignet gewählter Grundoptik mindestens 100° beträgt, soll anzeigen, dass durch diese Massnahme eine markante Verbesserung der Weitwinkeleigenschaften mit dem neuen Anamorphoten 25 erreicht werden kann. Mit der Gesamtlänge b' soll zusammen mit a' einerseits die Verschachtelung und andererseits die Zusammenschiebung der Baulängen auf eine Dimension b' kleiner (a+b) angegeben werden. Das Scharfstellen der Objektabbildung auf die Filmebene geschieht bei dieser Anrodnung durch Verschieben des gesamten mit der Bezugsziffer 35 bezeichneten optischen Teils.

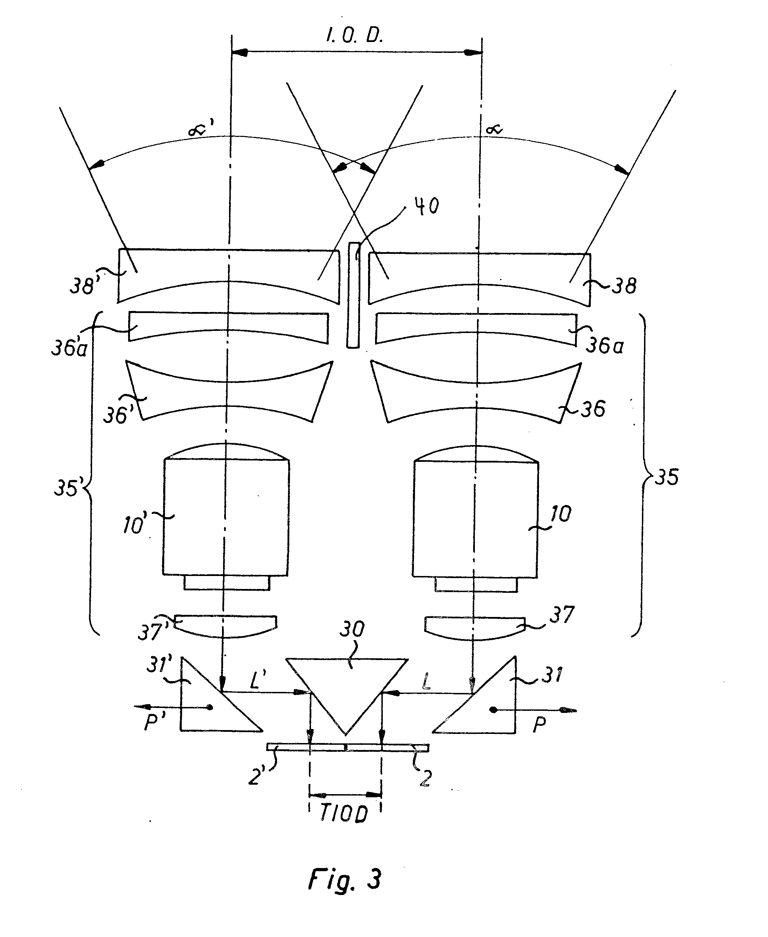

Die erreichte kurze Baulänge erlaubt nun wesentlich kleinere Frontlinsendurchmesser bei gleichbleibender Lichtstärke. Zur Bildung eines für Stereophotographie tauglichen anamorphotischen Blocks sind nun zwei parallel angeordnete optische Systeme wie sie unter Fig. 2 beschrieben wurden nötig. Solch eine optische Anordnung ist in der Fig. 3 dargestellt.

Von der nun doppelt vorhandenen Grundoptik 10, 10' ausgehend, sind objektraumseitig die negativ zylindrisch geschliffenen Linsenelemente 36, 36a bzw. 36', 36'a zu erkennen. Als Frontlinse dient ein sphärisch negativer Achromat zur weiteren Verkürzung der Brennweite. Dies ergibt eine zusätzliche Vergrösserung des Aufnahmewinkels α, der mit dieser Massnahme α = 100° deutlich überschreitet.

Die optische und geometrische Dimensionierung der Frontlinsen 38 und 38' kann so gewählt werden, dass bei vorgegebenem Abstand der Zentralachsen der objektive, nämlich der Abstand I.O.D., der der interokularen Distanz entspricht, die peripheren Anteile der Linsen sich soweit annähern, dass das optische Trennelement 40 zwischen den beiden Systemen beispielsweise noch eine Dicke von 1 mm aufweist.

Bildraumseitig sind dann hinter der Grundoptik 10 die positiven zylindrisch geschliffenen Linsenelemente 37 und 37' angeordnet.

In den von der Anordnung 35 umfassten optischen Elementen wird die gewünschte anamorphotische Kompression, beispielsweise 1:2, herbeigeführt und die Brennweite in der Horizontalebene halbiert. Die vorgeschalteten Streulinsen 38, 38' bewirken, wie schon erwähnt, eine Erweiterung des Aufnahmewinkels.

Die im Abstand I.O.D. parallel einfallenden Lichtstrahlen durchlaufen die beiden optischen Systeme und treten aus den Zylinderlinsen 37 und 37' aus. Die beiden dabei entstandenen anamorphotisch komprimierten Bilder entsprechen einem Links- und einem Rechtsbild, wie es von einem Objekt durch die Augen aufgenommen würde. Es bleibt, diese beiden interokular korrelierten Bilder nebeneinander auf die Filmebene abzubilden, wobei optisch keine Veränderung mehr stattfinden darf.

Die symmetrische Umlenkung der L/R-Bilder erfolgt in an sich bekannter Weise über ein System von oberflächenverspiegelten Prismen 30, 31, 31', von denen das über der Filmebene angeordnete Prisma 30 stationär ist und die hinter den einzelnen anamorphotischen Systemen 35, 35' liegenden Prismen 31 und 31' gegenläufig verschiebbar sind. Die mit L, L' bezeichneten Pfeile zeigen den Weg eines Lichtstrahls aus dem Anamorphot zur Filmebene an. Die Filmebene selbst ist in zwei Bezirke 2 und 2' geteilt; in diesen beiden Bezirken wird je eines der beiden L/R-Bilder abgebildet. Die Bildmittenpunkte weisen den verkleinerten Abstand TIOD auf, was einer lineartransformierten interokularen Distanz entspricht.

Die verspiegelten Prismen, die natürlich auch durch entsprechende Spiegel ersetzt werden können, werden derart dimensioniert und angeordnet, dass einerseits die erwünschte Umlenkung herbeigeführt wird und andererseits eine möglichst geringe Baulänge resultiert. Im vorliegenden Fall erwies sich eine zweimalige Umlenkung um 90° in Hinsicht auf die weiteren Aufgaben, die gleich nachfolgend beschrieben werden, als besonders günstig.

Bei den durch diese optische Anordnung ermöglichten Weitwinkelaufnahmen treten im Nahbereich erhebliche Abweichungen der Konvergenz auf, die entsprechend ausgeglichen werden müssen. Es wird also eine Parallelverschiebung der Bildstrahlen notwendig, um den auf der Filmebene veränderten Abstand der zusammengehörenden Bildpunkte TIOD wiederherzustellen. Dies geschieht durch das gegenläufige Verschieben der beiden peripheren bzw. hinter den Anamorphoten angeordneten Prismen 31, 31'. Diese Verschiebung ist durch zwei mit P, P' bezeichneten Pfeilen in entgegengesetzter Richtung bezeichnet. Bei einer Verschiebung, in der die beiden Prismen aufeinander zulaufen, rücken die parallelen zusammengehörenden Strahlen in der Filmebene auseinander. Bei der gegenläufigen, sich voneinander entfernenden Bewegung der Prismen, beginnen sich die zusammengehörenden Bildpunkte in den L/R-Bezirken der Filmebene sich einander anzunähern. Auf diese einfache Weise kann die Konvergenz für jede Aufnahmedistanz wieder herbeigeführt werden. Gleichzeitig mit diesen gegenläufigen Verschiebungen der beiden Prismen 31, 31' erkennt man, dass bzw. der mit L bezeichnete aus der Linse 37 austretende Bildstrahl je nach Prismenstellung einen längeren oder kürzeren Weg zur Filmebene 2 bzw. 2' zu durchlaufen hat. Bei geeigneter Wahl der Grundoptik 10, 10' bewirkt diese bildraumseitige Verlängerung oder Verkürzung des Lichtweges gleichzeitig die nötige Fokussierung oder Scharfstellung des Bildes bei Änderung der Aufnahmedistanz. Somit gelingt es, mit dieser Prismenanordnung und der gegenläufigen Verschiebung zweier Prismen in bezug auf ein stationäres Prisma, mit einer einzigen Manipulation simultan die Konvergenz sowie auch die Fokussierung zu korrigieren. Im übrigen sind die beiden Prismen 31, 31' die einzigen optischen Teile, die in dieser Anordnung beweglich angebracht sein müssen; somit werden mit einem Minimum an beweglichen Teilen sämtliche Einstellaufgaben während einer Aufnahme durchgeführt.

Die Bewegung der Prismen wird am vorteilhaftesten durch eine verhältnismässig massive und damit tragende Gewindestange mit zwei gegenläufigen Gewinden durchgeführt, wobei am einen Ende dieser Gewindestange ausserhalb der Lagerstellen ein Bedienungsorgan zum Drehen des Gewindes angebracht wird. Die Eichung des Regulierorgans wird auf bekannte Weise durchgeführt.

Die obenbeschriebene optische Anordnung erlaubt extreme Weitwinkelaufnahmen zur Stereoprojektion mit Kamerabauformen von bisher unbekannter Kompaktheit. Auch gewichtsmässig macht sich dies bemerkbar. Beispielsweise können aufgrund des hier angegebenen Systems Handkameras gebaut werden, die durchaus manipulierbar sind und nur einfachste Bedienungshandgriffe erfordern. Ebenso eignet sich dieses System praktisch für alle Filmformate, die Begrenzung nach unten liegt eigentlich nur noch in der zur Verfügung stehenden Filmfläche.

## Patentansprüche

1. Optische Anordnung zur Erzeugung zweier anamorphotischer und durch einen interokularen Basisabstand korrelierter Bilder, wobei zwei afokale anamorphotische Systeme und zwei Grundoptiken verwendet werden, gekennzeichnet durch je ein in bezug auf die Grundoptik (10, 10') objektraumseitig angeordnetes zylindrisches Negativlinsensystem (36, 36a, 36', 36'a) und je ein bildraumseitig angeordnetes zylindrisches Positivlinsensystem (37, 37').

2. Optische Anordnung gemäss Patentanspruch 1, gekennzeichnet durch ein dem Positivlinsensystem (37, 37') nachgeschaltetes Umlenkspiegelsystem (30, 31, 31') zur Verkleinerung der stereoskopischen Basis (I.O.D.).

3. Optische Anordnung gemäss Patentanspruch 2, dadurch gekennzeichnet, dass auf den optischen Hauptachsen ein zu diesen Achsen orthogonal bewegbares Umlenkspiegelpaar (31, 31') angeordnet ist.

4. Optische Anordnung gemäss Patentansprüchen 2 und 3, dadurch gekennzeichnet, dass im umgelenkten Lichtstrahl (L, L') ein in bezug auf die Hauptachsen unbewegbares Umlenkspiegelpaar (30) angeordnet ist.

5. Optische Anordnung gemäss den Patentansprüchen 2, 3 und 4, dadurch gekennzeichnet, dass die Umlenkspiegel (30, 31, 31') als oberflächenverspiegelte 90°-Umlenkprismen ausgebildet sind.

6. Optische Anordnung gemäss den Patentansprüchen 2 bis 4, dadurch gekennzeichnet, dass die Umlenkspiegel (30, 31, 31') jeweils unter 45° zum Hauptstrahl angeordnet sind.

## Claims

1. Optical arrangement for producing two anamorphotic images correlated by an interocular base distance, using two afocal anamorphotic systems and two basic optics, characterized by a cylindrical negative lens system (36, 36a, 36', 36'a) arranged on the object space side with respect to the basic optics (10, 10') and a cylindrical positive lens system (37,37') arranged on the image space side.

2. Optical arrangement according to claim 1, characterized by a reflecting mirror system (30, 31, 31') connected downstream of the positive lens system (37, 37') for reducing the stereoscopic base (I.O.D.).

3. Optical arrangement according to claim 2, characterized in that a pair of reflecting mirrors (31, 31') is arranged on the principal optical axes and is movable orthogonal thereto.

4. Optical arrangement according to claims 2 and 3, characterized in that a pair of reflecting mirrors (30), which is fixed with respect to the principal axes, is arranged in the reflected light beam (L, L').

5. Optical arrangement according to claims 2, 3 and 4, characterized in that the reflecting mirrors (30, 31, 31') are constructed as surface-silvered 90° reflecting prisms.

6. Optical arrangement according to claims 2 to 4, characterized in that the reflecting mirrors (30,31, 31') are in each case at an angle of 45° to the main beam.

## Revendications

1. Système optique permettant d'obtenir deux images anamorphotiques corrélées à une distance inter-oculaire, deux systèmes afocaux et anamorphotiques ainsi que deux optiques de base étant alors utilisés, caractérisé par un système de lentilles cylindriques concaves (36, 36a, 36', 36a') monté du côté de l'objectif de l'optique de base (10, 10') et du côté de l'espace-image par un système de lentilles cylindriques convexes (37, 37').

2. Système optique selon la revendication 1, caractérisé par un système de miroirs de déviation (30, 31, 31') monté après le système de lentilles convexes (37,37') pour la réduction de la base stéréoscopique (I.O.D.).

3. Système optique selon la revendication 2, caractérisé en ce qu'une paire de miroirs de déviation (31, 31') est monté de façon à pouvoir se déplacer orthogonalement vers les axes optiques principaux sur lesquels elle est mise en place.

4. Système optique selon les revendications 2 et 3, caractérisé en ce qu'une paire de miroirs de déviation (30) fixe par rapport aux axes optiques principaux est interposée dans le trajet du rayon lumineux dévié (L, L').

5. Système optique selon les revendications 2, 3 et 4, caractérisé en ce que les miroirs de déviation (30, 31, 31') sont réalisés en tant que prisme de déviation de 90° à surfaces réfléchissantes.

6. Système optique selon les revendications 2 à 4, caractérisé en ce que les miroirs de déviation (30, 31, 31') sont montés sous un angle de 45° par rapport au rayon principal.

Fig. 1

Fig. 2

0 063 157

Fig. 3